# EUROPEAN PATENT APPLICATION

(11) **EP 0 583 766 A1**
(43) Date of publication of application: **23.02.1994**
(21) Application number: 93113092.6
(22) Date of filing: 16.08.1993
(51) Int. Cl.: G02B 27/22, G03C 9/02, H04N 13/04

(54) **Depth image printed on lenticular material**

(30) Priority: 18.08.1992 US 931744
(71) Applicant: EASTMAN KODAK COMPANY, Rochester, New York 14650-2201 (US)
(72) Inventor: Schindler, Roland R., c/o Eastman Kodak Company, Rochester, New York 14650-2201 (US)
(74) Representative: Wagner, Karl H., Dipl.-Ing.

(57) **Abstract**

In a lenticular printing system, a lenticular material is aligned to a depth image. Initially, the image is captured, and an output image signal is generated therefrom. The output image signal is then electronically interpolated, and an integral image is generated. The lenticular material is provided, having a predetermined number of lenticules, and is coated with a receiver material. The electronically interpolated integral image is then printed directly on a rear surface of the lenticular material.

## Description

### Technical Field

The present invention is directed to the field of depth imaging and, more particularly, to use of a lenticular material to view three-dimensional images, where the image is printed directly on the lenticular material.

### Background Art

Three-dimensional photography, including autostereoscopic imaging and stereoscopic imaging on the basis of the amount of information involved, is well known in the art. The quantity of information for a stereoscopic (or binocular) image is only twice that of a planar (one- dimensional) image, while much greater information is present for a truly three-dimensional image (often termed an autostereoscopic image). Images of the latter type are truly spatial images that gradually show more of the right side of the object when the observer moves rightward, and more of the left side of the object when the observer moves leftward.

Lenticular material are known in the art for use as a method of viewing 3-dimensional images without the need for special glasses. One known process is to lay down the images on photographic paper or on film, then superimposing a lenticular screen over this image. One problem with this method is the difficulty in aligning the screen to the image, since this is typically a manual process. Going through the lens causes aberrations and distortions in the final image.

U.S. Patent Nos. 3,486,592; 4,402,150; and 5,035,929 have attempted to solve for the inherent errors and problems with alignment which have been recognized. These patents teach the concept of putting the film directly on the lens. While this approach has improved the alignment problem, it still involves the passive step of developing a film. Consequently, lens artifacts will be present on the image as one captures the image. Additionally, the step of processing the film adds greatly to the cost of the procedure.

It is seen then that there exists a need for an active one step process of displaying and viewing an image which overcomes the problems associated with the prior art.

### Summary of the Invention

This need is met by the lenticular system and method according to the present invention, wherein an image is actually printed directly on the lenticular material. The present invention has the advantage, then, of eliminating the need for a film image which the lenticular material is to be placed over.

In accordance with one aspect of the present invention, a lenticular material is aligned to a depth image. Initially, the image is captured, and an output image signal is generated therefrom. The output image signal is then electronically interpolated, and an integral image is generated. The lenticular material is provided, having a predetermined number of lenticules, and is coated with a receiver material. The electronically interpolated integral image is then printed directly on a rear surface of the lenticular material.

Accordingly, it is an object of the present invention to provide a 3-dimensional image which is printed directly on a lenticular material. It is an advantage of the present invention that there is no requirement to externally align the lenticular material to the image. The inventor has departed from conventional lenticular photography, in which the image is captured on paper or film before being transferred to the lenticular material. Since the image is being printed directly on the lenticular material, the present invention provides the further advantage of eliminating the need to use paper or film.

Other objects and advantages of the invention will he apparent from the following description, the accompanying drawings and the appended claims.

### Brief Description of the Drawing

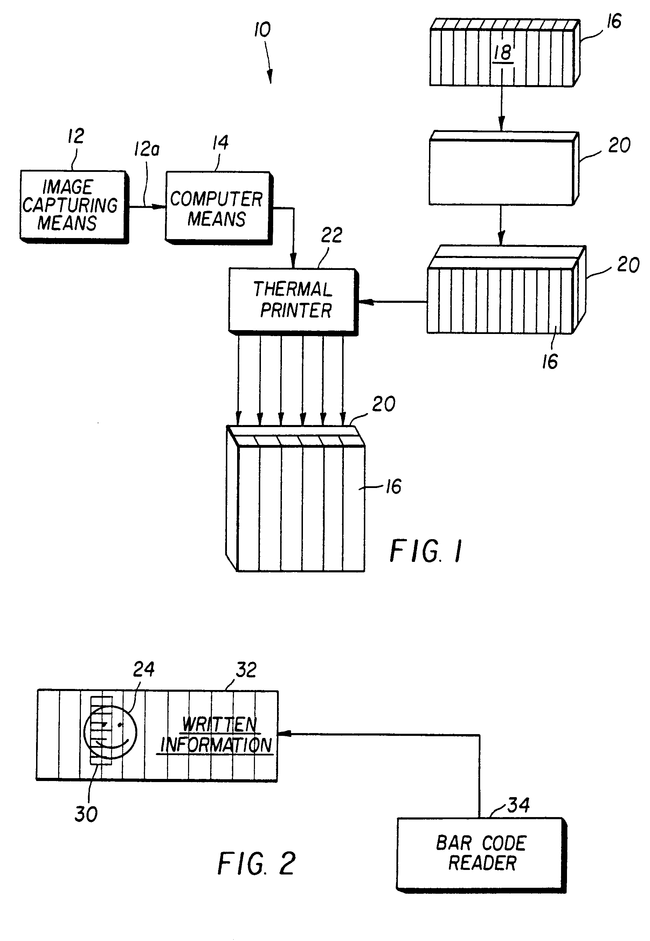

FIG. 1 is a block diagram of the lenticular printing system of the present invention.

### Detailed Description of the Preferred Embodiments

Referring to the drawing, FIG. 1 illustrates a block diagram of a lenticular printing system 10 of the present invention. An image capturing means 12 captures an image and generates an output image signal 12a. The output image signal 12a is input to a computer means 14, which repixelizes or interpolates the output image signal 12a and generates an integral image 14a therefrom.

The image capturing means 12 can capture the image by any suitable means, including electronically as with a camcorder or other charge coupled device, on film, or by computer, in accordance with the teachings of commonly assigned pending applications having U.S. Serial Nos. 885,699 and 722,713 incorporated by reference herein. Depending on the capture method used, the computer means 14 either repixelizes the received image information, or interpolates the received image information. Employing the computer process eliminates the optical process of printing through a lenticular material.

For example, n number of images can be captured and then repixelized. In such an image capture method, the n number of images may be captured on film. The film is then electronically scanned, such as by an electronic scanner, to produce a digital image of each of the n number of images. The digital images are transferred to a computer, resulting in n number of files in the computer. A mapping structure in the computer takes the pixels from each individual file to create one master (repixelized) file.

Alternatively, as few as two or as many as, for example, twenty-four images can be captured to provide the outer limits of the image. The captured images are then interpolated, and the area between the outer limits is filled in with the images that would occur over time. An integral, autostereoscopic three-dimensional image suitable for lenticular display is generated from a plurality of image perspectives. Initially, actual image signals are generated from a plurality of actual images obtained from a plurality of actual image perspectives. The additional images are obtained by operating upon the actual image signals and forming interpolated image signals from hypothetical image perspectives. An integral three- dimensional (interpolated) image is generated form the actual image perspectives and the hypothetical (interpolated) image perspectives.

Continuing with FIG. 1, a lenticular lens 16 is provided, having a prescribed number of lenticules, depending on the number of views behind each lenticule. The lenticular lens 16 has a front surface 18 and a rear surface (not shown) behind the front surface 18. The rear surface of the lenticular lens 16 is coated with a receiver material 20, such as 1 mm polycarbonate. The receiver material 20 allows for continuous and smooth printing on the rear surface of the lens 16.

Each integral image 14a from the computer means 14 is then printed directly on the lenticular lens, such as by a thermal printer 22 or other suitable printing device. The thermal printer, situated between the computer means 14 and the coated lens 16, receives the image information from the computer means 14 and prints the three-dimensional image on the lenticular lens 16.

The present invention provides for a lenticular printing system and method, wherein a depth image is printed directly on to a lenticular material. For a reflective print, a clear paper is placed behind the lenticular material; while for transparency viewing, the image is placed in front of a light source.

### Industrial Applicability and Advantages

The present invention is useful in the field of photography systems, display, and printing systems and badges, and has the advantage of providing a 3-dimensional image printed directly on a lenticular material. It is a further advantage of the present invention that external alignment of the lenticular material to the imaging material is required. Finally, the present invention provides the advantage of eliminating the need for photography paper or film, making the process of the present invention quicker and less expensive than existing processes.

Having described the invention in detail and by reference to the preferred embodiment thereof, it will be apparent that other modifications and variations are possible without departing from the scope of the invention defined in the appended claims.

The invention may be summarized as providing a system for aligning a lenticular material to a depth image comprising:
an image capturing means for capturing an image and generating an output image signal;
a computer means for receiving the output image signal and generating an integral image therefrom;
and
printing means for printing the integral image directly on the coated rear surface of the lenticular material.

Preferred embodiments of the invention are disclosed in the claims and also the dependent claims, which should be read as depending not only on the specified claims, but on any other claim and combination thereof. The same is true for the following summary of the invention:

### The invention may be summarized as follows:

1. A system for aligning a lenticular material to a depth image comprising:
   an image capturing means for capturing an image and generating an output image signal;
   a computer means for receiving the output image signal and generating an integral image therefrom;
   a lenticular material having a predetermined number of lenticules, the lenticular material having a front surface and a rear surface;
   a receiver material coated on the rear surface of the lenticular material; and
   printing means for printing the integral image directly on the coated rear surface of the lenticular material.
2. A system for aligning a lenticular screen to a depth image as in 1 wherein the printing means comprises a thermal printer.
3. A system for aligning a lenticular screen to a depth image as in 1 wherein the printing means comprises a copying machine.
4. A system for aligning a lenticular screen to a depth image as in 1 wherein the computer means further comprises means for producing a repixelized image from the output image signal.
5. A system for aligning a lenticular screen to a depth image as in 4 wherein each repixelized image is printed directly under a corresponding lenticular lens for the entire lenticular material.
6. A system for aligning a lenticular screen to a depth image as in 1 wherein the computer means further comprises means for producing an interpolated image from the output image signal.
7. A system for aligning a lenticular screen to a depth image as in 6 wherein each interpolated image is printed directly under a corresponding lenticular lens for the entire lenticular material.
8. A method of aligning a lenticular material to a depth image comprising the steps of:
   capturing a plurality of images and generating output image signals;
   electronically repixelizing the output image signals and generating an integral image therefrom;
   providing a lenticular material having a predetermined number of lenticules;
   coating the lenticular material with a receiver material;
   printing the electronically interpolated integral image directly on a rear surface of the lenticular material.
9. A method of aligning a lenticular screen to a depth image as in 8 wherein the step of printing the electronically repixelized integral image comprises the step of using a thermal printer.
10. A method of aligning a lenticular screen to a depth image as in 8 wherein the step of printing the electronically repixelized integral image comprises the step of using a copying machine.
11. A method of aligning a lenticular screen to a depth image as in 8 wherein the step of electronically repixelizing the output image signal and generating an integral image therefrom further comprises the steps of:
   electronically scanning the output image signals to generate digital images; and
   creating a repixelized image from individual pixels of each of the digital images.
12. A method of aligning a lenticular screen to a depth image as in 11 wherein the repixelized image is printed directly under a corresponding lenticular lens for the entire lenticular material.
13. A method of aligning a lenticular material to a depth image comprising the steps of:
   capturing an image and generating an output image signal;
   electronically interpolating the output image signal and generating an integral image therefrom;
   providing a lenticular material having a predetermined number of lenticules;
   coating the lenticular material with a receiver material;
   printing the electronically interpolated integral image directly on a rear surface of the lenticular material.
14. A method of aligning a lenticular screen to a depth image as in 13 wherein the step of printing the electronically interpolated integral image comprises the step of using a thermal printer.
15. A method of aligning a lenticular screen to a depth image as in 13 wherein the step of printing the electronically interpolated integral image comprises the step of using a copying machine.
16. A method of aligning a lenticular screen to a depth image as in 13 wherein the step of electronically interpolating the output image signal and generating an integral image therefrom further comprises the step of producing a hypothetical image from the electronically interpolated integral image.
17. A method of aligning a lenticular screen to a depth image as in 16 wherein each hypothetical image is printed directly under a corresponding lenticular lens for the entire lenticular material.

## Claims

1. A system for aligning a lenticular material to a depth image comprising:
an image capturing means for capturing an image and generating an output image signal;
a computer means for receiving the output image signal and generating an integral image therefrom;
a lenticular material having a predetermined number of lenticules, the lenticular material having a front surface and a rear surface;
a receiver material coated on the rear surface of the lenticular material; and
printing means for printing the integral image directly on the coated rear surface of the lenticular material.

2. A system for aligning a lenticular screen to a depth image as claimed in claim 1 wherein the printing means comprises a thermal printer or a copying machine.

3. A system for aligning a lenticular screen to a depth image as claimed in claim 1 or 2 wherein the computer means further comprises means for producing a repixelized image from the output image signal, and wherein preferably each repixelized image is printed directly under a corresponding lenticular lens for the entire lenticular material.

4. A system for aligning a lenticular screen to a depth image as claimed in any of claims 1 - 3 wherein the computer means further comprises means for producing an interpolated image from the output image signal, and wherein preferably each interpolated image is printed directly under a corresponding lenticular lens for the entire lenticular material.

5. A method of aligning a lenticular material to a depth image comprising the steps of:
capturing a plurality of images and generating output image signals;
electronically repixelizing the output image signals and generating an integral image therefrom;
providing a lenticular material having a predetermined number of lenticules;
coating the lenticular material with a receiver material;
printing the electronically interpolated integral image directly on a rear surface of the lenticular material.

6. A method of aligning a lenticular screen to a depth image as claimed in claim 5 wherein the step of printing the electronically repixelized integral image comprises the step of using a thermal printer or a copying machine.

7. A method of aligning a lenticular screen to a depth image as claimed in claim 5 wherein the step of electronically repixelizing the output image signal and generating an integral image therefrom further comprises the steps of:
electronically scanning the output image signals to generate digital images;
creating a repixelized image from individual pixels of each of the digital images, and wherein preferably the repixelized image is printed directly under a corresponding lenticular lens for the entire lenticular material.

8. A method of aligning a lenticular material to a depth image comprising the steps of:
capturing an image and generating an output image signal;
electronically interpolating the output image signal and generating an integral image therefrom;
providing a lenticular material having a predetermined number of lenticules;
coating the lenticular material with a receiver material;
printing the electronically interpolated integral image directly on a rear surface of the lenticular material.

9. A method of aligning a lenticular screen to a depth image as claimed in claim 8 wherein the step of printing the electronically interpolated integral image comprises the step of using a thermal printer, or a copying machine.

10. A method of aligning a lenticular screen to a depth image as claimed in claim 8 wherein the step of electronically interpolating the output image signal and generating an integral image therefrom further comprises the step of producing a hypothetical image from the electronically interpolated integral image, and wherein preferably each hypothetical image is printed directly under a corresponding lenticular lens for the entire lenticular material.
